# EUROPÄISCHE PATENTANMELDUNG

(11) **EP 4 748 752 A1**
(43) Veröffentlichungstag der Anmeldung: **27.05.2026**
(21) Anmeldenummer: 25218331.4
(22) Anmeldetag: 25.11.2025
(51) Int. Cl.: B65G 19/02, B08B 9/42, B65G 47/84, B65G 45/22, B65G 21/00

(54) **FÖRDERER ZUM BEHÄLTERTRANSPORT UND ZUGEHÖRIGES VERFAHREN**

(30) Priorität: 26.11.2024 DE 102024134762
(71) Anmelder: Krones AG, 93073 Neutraubling (DE)
(72) Erfinder: LANDLER, Bruno, 93073 Neutraubling (DE)
(74) Vertreter: v. Bezold & Partner Patentanwälte - PartG mbB

(57) **Zusammenfassung**

Die Erfindung betrifft u.a. einen Förderer (18) zum Behältertransport für eine Behälterbehandlungsanlage (10). Der Förderer (18) weist ein umlaufendes Transportelement (20) und mehrere Mitnehmer (40), die voneinander beabstandet entlang des umlaufenden Transportelements (20) angeordnet sind und an dem umlaufenden Transportelement (20) zum Mitnehmen von Behältern (12) angebracht sind, auf. Der Förderer (18) weist ferner eine Reinigungsfluidleitung (56) zum Führen von Reinigungsfluid, mehrere Sprüheinrichtungen (58), die mit der Reinigungsfluidleitung (56) zum Versprühen des Reinigungsfluids verbunden sind, und einen Hauptlängsträger (44), der das umlaufende Transportelement (20) und die Reinigungsfluidleitung (56) trägt, auf.

## Beschreibung

### Technisches Gebiet

Die Erfindung betrifft einen Förderer zum Behältertransport, eine Behälterbehandlungsanlage mit einem Förderer und ein zugehöriges Verfahren.

### Technischer Hintergrund

Es ist bekannt, in einer Behälterbehandlungsanlage Förderer zum Transportieren von Behältern zwischen unterschiedlichen Maschinen der Anlage einzusetzen.

Beispielsweise kann bei einem Füller-Verschließer-Block der Füller eine andere Maschinenteilung aufweisen als der Verschließer. Eine Förderkette mit Mitnehmern kann den Füller und den Verschließer zum Transportieren der Behälter von dem Füller zu dem Verschließer miteinander verbinden.

DE 10 2020 116 779 A1 bezieht sich auf eine Füllmaschine zum Füllen von Dosen oder dergleichen Behälter mit einem flüssigen Füllgut. Dabei umfasst die Behälterbehandlungsvorrichtung einen ersten als Behältereinlauf ausgebildeten Transporteur, einen in Behandlungsrichtung nachgelagerten und um eine Maschinenachse umlaufenden Rotor mit mehreren Behandlungspositionen zur Behandlung der Behälter, sowie einen dem Rotor in Behandlungsrichtung wiederum nachgelagerten und als Behälterauslauf ausgebildeten zweiten Transporteur. Der zweite Transporteur ist dabei als Kettenförderer ausgebildet, der an einem endlos umlaufend angetriebenen Fördermittel zumindest einen mit dem Fördermittel mitbewegten Führungsfinger mit einem ersten und einem zweiten Führungsabschnitt aufweist, der die an den mehreren Behandlungspositionen des Rotors behandelten und noch unverschlossenen Behälter übernimmt.

Nachteilig am bekannten Stand der Technik kann dessen mangelnde Eignung für besonders hygienische Anwendungen, z. B. unter Reinraumbedingungen, sein.

Der Erfindung liegt die Aufgabe zu Grunde, eine verbesserte Technik zum Transportieren von Behältern zu schaffen, mit der sich auch hohe Hygieneanforderungen, z. B. im Reinraum, erfüllen lassen.

### Zusammenfassung der Erfindung

Die Aufgabe wird gelöst durch die Merkmale der unabhängigen Ansprüche. Vorteilhafte Weiterbildungen sind in den abhängigen Ansprüchen und der Beschreibung angegeben.

Ein Aspekt betrifft einen Förderer zum Behältertransport, vorzugsweise Dosentransport, für eine Behälterbehandlungsanlage. Der Förderer weist ein umlaufendes Transportelement, vorzugsweise eine Transportkette, auf. Der Förderer weist mehrere Mitnehmer, vorzugsweise Kragarme oder Anlagefinger, auf. Die mehreren Mitnehmer sind voneinander beabstandet entlang des umlaufenden Transportelements angeordnet und an dem umlaufenden Transportelement zum Mitnehmen von Behältern, vorzugsweise jeweils eines Behälters, (z. B. starr) angebracht. Der Förderer weist eine Reinigungsfluidleitung zum Führen von Reinigungsfluid und mehrere Sprüheinrichtungen, die mit der Reinigungsfluidleitung zum Versprühen des Reinigungsfluids (z. B. im und/oder auf den Förderer) verbunden sind, auf. Der Förderer weist einen, vorzugsweise rohrförmigen, (z. B. einzigen) Hauptlängsträger auf, der das umlaufende Transportelement und die Reinigungsfluidleitung trägt (z. B. über Ausleger usw.).

Vorteilhaft kann der Förderer auch hohe Hygieneanforderungen erfüllen. Der Einsatz eines massiven Hauptlängsträgers zum Tragen der Anbauteile usw. ermöglicht, dass nicht eine oder mehrere Reinigungsfluidleitungen zum Tragen von Anbauteilen (z. B. über Rohrschellen usw.) genutzt werden müssen. Durch die Reinigungsfluidleitung kann somit auch sehr heißes Reinigungsfluid (z. B. ≥ 80°C) geführt werden, da die wärmebedingte Ausdehnung der Reinigungsfluidleitung aufgrund des Vorhandenseins des Hauptlängsträgers unproblematisch für die Tragkonstruktion des Förderers ist. Vorteilhaft kann somit auch eine Reinigung des Förderers mit dem sehr heißen Reinigungsfluid ermöglicht werden, was die Reinigungswirkung und damit die Hygiene verbessert. Der massive Hauptlängsträger kann somit vorteilhaft eine Minimierung der Auswirkungen von Kalt/Warm-Phasen bei der Reinigung oder bspw. Heißabfüllung ermöglichen.

In einem Ausführungsbeispiel ist die Reinigungsfluidleitung schwimmend, vorzugsweise längsverschiebbar, bezüglich des Hauptlängsträgers gelagert, bevorzugt zum Kompensieren einer wärmebedingten Längsausdehnung der Reinigungsfluidleitung. Vorzugswiese kann die Reinigungsfluidleitung über mindestens ein Hakenelement schwimmend (vorzugsweise längsverschiebbar) bezüglich des Hauptlängsträgers gelagert sein, und/oder die Reinigungsfluidleitung kann an (mindestens) einem Ausleger, der (z. B. direkt) mit dem Hauptlängsträger verbunden ist, schwimmend (vorzugsweise längsverschiebbar) gelagert sein (z. B. über jeweils ein Hakenelement). Vorteilhaft kann die schwimmende Lagerung ermöglichen, dass die Reinigungsfluidleitung auch mit vergleichsweise heißem Reinigungsfluid (z. B. ≥ 80°C) beaufschlagt werden kann, wodurch sich die Reinigungswirkung und Hygiene verbessern lässt. Die substantielle Längsausdehnung der Reinigungsfluidleitung aufgrund des heißen Reinigungsfluids kann vorteilhaft durch die schwimmende Lagerung aufgenommen werden.

Vorzugsweise kann die Reinigungsfluidleitung mit einer Heizeinrichtung zum Erwärmen des Reinigungsfluids verbunden sein.

In einem weiteren Ausführungsbeispiel weist der Förderer ferner eine Überschubplatte auf, über die die Behälter während des Mitnehmens mittels der Mitnehmer schiebbar sind. Die Überschubplatte ist von dem Hauptlängsträger getragen. Vorteilhaft kann damit ein schneller und zuverlässiger Transport der Behälter ermöglicht werden. Vorteilhaft kann zum Abstützen der Überschubplatte wieder die Hauptrahmenkomponente genutzt werden, nämlich der Hauptlängsträger, wodurch sich eine einfache und stabile Konstruktion ergibt, die unbeeinflusst von einer etwaigen Längsausdehnung der Reinigungsfluidleitung ist.

In einer Ausführungsform ist die Überschubplatte schwimmend, vorzugsweise längsverschiebbar, bezüglich des Hauptlängsträgers gelagert, bevorzugt zum Kompensieren einer wärmebedingten Längsausdehnung der Überschubplatte. Vorzugsweise kann die Überschubplatte bezüglich des Hauptlängsträgers mittels (mindestens) einer Befestigungselement-Langloch-Verbindung schwimmend (vorzugsweise längsverschiebbar) bezüglich des Hauptlängsträgers gelagert sein, und/oder die Überschubplatte kann an (mindestens) einem (z. B. weiteren) Ausleger, der (z. B. direkt) mit dem Hauptlängsträger verbunden ist, schwimmend (vorzugsweise längsverschiebbar) gelagert sein (z. B. jeweils über eine Befestigungselement-Langloch-Verbindung). Vorteilhaft kann die schwimmende Lagerung ermöglichen, dass auch die Überschubplatte mit dem vergleichsweise heißen Reinigungsfluid (z. B. ≥ 80°C) gereinigt werden kann, wodurch sich die Reinigungswirkung und Hygiene verbessern lässt. Die substantielle Längsausdehnung der Überschubplatte aufgrund des heißen Reinigungsfluids kann vorteilhaft durch die schwimmende Lagerung aufgenommen werden.

Beispielsweise kann die Befestigungselement-Langloch-Verbindung mindestens ein Befestigungselement und mindestens ein Langloch einer Lagerplatte, in dem das mindestens eine Befestigungselement längsverschiebbar geführt ist, aufweisen.

In einer weiteren Ausführungsform erstreckt sich die Überschubplatte im Wesentlichen entlang einer gesamten Förderstrecke des Förderers, und/oder die Überschubplatte weist mehrere (z. B. bündige) Überschubplattensegmente auf, die miteinander, vorzugsweise fluchtend, ausgerichtet sind.

In einer Ausführungsvariante weist der Förderer ferner ein Antriebsrad zum Antreiben des Transportelements auf, wobei das Transportelement um das Antriebsrad gelegt ist, vorzugsweise über einen Winkelbereich von 180° des Antriebsrads. Vorzugsweise kann der Förderer ferner eine Antriebsquelle, die antreibend mit dem Antriebsrad verbunden ist, und optional ein abgedichtetes Gehäuse, in dem die Antriebsquelle angeordnet ist, aufweisen. Vorteilhaft kann das abgedichtete Gehäuse eine besonders gründliche Reinigung des Förderers bspw. mit herumspritzenden Reinigungsfluid und Dampfentstehung ermöglichen, da kein Risiko besteht, die Antriebsquelle zu beschädigen.

In einer weiteren Ausführungsvariante weist das abgedichtete Gehäuse mindestens eine Zugangsöffnung, vorzugsweise eine obere Zugangsöffnung und eine seitliche Zugangsöffnung, auf, die mittels einer lösbaren Abdeckung abgedeckt und mit einem, vorzugsweise ringförmigen, Dichtelement (z. B. O-Ring) abgedichtet ist. Alternativ oder zusätzlich kann das abgedichtete Gehäuse bspw. über ein Dichtelement abgedichtet auf einem Maschinentisch (z. B. einer Verschließvorrichtung) aufgesetzt sein. Vorteilhaft kann durch die Zugangsöffnung(en) bspw. eine einfache Montage und Demontage einer Antriebswelle zum Antreiben des Antriebsrads ermöglicht werden, ohne dass die Hygieneanforderungen reduziert werden. Die abgedichtete Anordnung der lösbaren Abdeckung(en) und des Gehäuses auf dem Maschinentisch ermöglichen, dass bspw. kein Reinigungsfluid von unten in das Gehäuse eindringt und zu der Antriebsquelle gelangt.

In einem Ausführungsbeispiel weist der Förderer ferner ein Hauptumlenkrad zum Umlenken des umlaufenden Transportelements auf. Das umlaufende Transportelement ist um das Hauptumlenkrad gelegt, vorzugsweise über einen Winkelbereich von 180° des Hauptumlenkrads. Das Hauptumlenkrad ist an einem Endbereich des Förderers angeordnet. Vorteilhaft kann durch die Nutzung eines Hauptumlenkrads auf den Einsatz von herkömmlichen Gleitprofilen zum Umlenken des Transportelements verzichtet werden. Nachteilig an diesen herkömmlichen Gleitprofilen kann deren signifikanter Schmierbedarf sein, der mit dem Hauptumlenkrad wesentlich reduziert werden kann. Vorteilhaft kann somit ebenfalls die Hygiene verbessert werden.

In einem weiteren Ausführungsbeispiel weist der Förderer ferner eine, vorzugsweise aktive, Spanneinrichtung zum Spannen des umlaufenden Transportelements auf. Das Hauptumlenkrad ist mittels der Spanneinrichtung zum Spannen des umlaufenden Transportelements längsverschiebbar. Vorteilhaft kann die Spanneinrichtung das umlaufende Transportelement stets unter der richtigen Spannung halten. Dies ist wichtig, um einen reibungslosen und effizienten Betrieb des Förderers zu gewährleisten.

In einer Ausführungsform ist die Spanneinrichtung an dem Hauptlängsträger getragen, vorzugsweise an einem Ende des Hauptlängsträgers. Alternativ oder zusätzlich kann die Spanneinrichtung eine pneumatische Spanneinrichtung sein. Alternativ oder zusätzlich kann die Spanneinrichtung einen, vorzugsweise pneumatischen, Druckzylinder aufweisen, der das Hauptumlenkrad zum Ausfahren entlang einer Längsachse des Förderers zum Spannen des umlaufenden Transportelements beaufschlagt. Vorteilhaft kann zum Abstützen der Spanneinrichtung wieder die Hauptrahmenkomponente genutzt werden, nämlich der Hauptlängsträger, wodurch sich eine einfache und stabile Konstruktion ergibt, die unbeeinflusst von einer etwaigen Längsausdehnung der Reinigungsfluidleitung ist. Die fortwährende Beaufschlagung des Umlenkrads ermöglicht vorteilhaft ein aktives System, dass sich im Betrieb des Förderers selbststätig bspw. bei einer Kettenlängung ausfährt, um ein Durchhängen des Transportelements zu verhindern.

In einer weiteren Ausführungsform weist der Förderer ferner einen Positionssensor zum Erfassen einer Position der Spanneinrichtung und/oder des Hauptumlenkrads auf. Vorzugsweise kann der Förderer ferner eine Steuereinrichtung aufweisen, die dazu konfiguriert ist, eine Funktionsfähigkeit des umlaufenden Transportelements abhängig von einer Signalausgabe des Positionssensors zu überwachen. Vorteilhaft kann somit automatisch eine übermäßige Längung oder ein (z. B. Teil-) Riss des Transportelements erkannt werden.

Vorzugsweise kann sich der Begriff "Steuereinrichtung" auf eine Elektronik (z. B. ausgeführt als eine Treiberschaltung oder mit Mikroprozessor(en) und Datenspeicher) und/oder eine mechanische, pneumatische und/oder hydraulische Steuerung beziehen, die je nach Ausbildung Steuerungsaufgaben und/oder Regelungsaufgaben und/oder Verarbeitungsaufgaben übernehmen kann. Auch wenn hierin der Begriff "Steuern" verwendet wird, kann damit gleichsam zweckmäßig auch "Regeln" bzw. "Steuern mit Rückkopplung" und/oder "Verarbeiten" umfasst bzw. gemeint sein. Die Steuereinrichtung kann beispielsweise eine Zentralsteuereinrichtung sein oder mehrere dezentral bzw. verteilt angeordnete Steuereinheiten aufweisen.

In einer Ausführungsvariante weist der Förderer ferner mindestens ein Nebenumlenkrad zum Umlenken des umlaufenden Transportelements auf. Vorzugsweise kann das umlaufende Transportelement um das mindestens eine Nebenumlenkrad gelegt sein (z. B. jeweils in einem Winkelbereich ≤ 90° oder ≤ 60°). Bevorzugt kann das mindestens eine Nebenumlenkrad in einem Rückführabschnitt des Förderers (z. B. am Untertrum) zum Rückführen des umlaufenden Transportelements angeordnet sein. Vorzugsweise kann das mindestens eine Nebenumlenkrad ein Höhenniveau des umlaufenden Transportelements verändern, vorzugsweise erhöhen. Vorteilhaft kann durch die Nutzung des mindestens einen Nebenumlenkrads auf den Einsatz von herkömmlichen Gleitprofilen zum Umlenken des Transportelements verzichtet werden. Nachteilig an diesen herkömmlichen Gleitprofilen kann, wie bereits erwähnt, deren signifikanter Schmierbedarf sein, der mit dem mindestens einen Nebenumlenkrad wesentlich reduziert werden kann. Vorteilhaft kann somit ebenfalls die Hygiene verbessert werden.

In einem Ausführungsbeispiel ist mindestens eines erfüllt von:
- der Hauptlängsträger ist bezüglich einer Querachse des Förderers mittig im Förderer angeordnet;
- der Hauptlängsträger ist zwischen einem Obertrum und einem Untertrum des Förderers angeordnet;
- der Hauptlängsträger erstreckt sich im Wesentlichen entlang einer gesamten Länge des Förderers;
- der Hauptlängsträger weist mehrere Hauptlängsträgersegmente auf, die miteinander, vorzugsweise fluchtend, ausgerichtet sind;
- der Hauptlängsträger ist höhenversetzt zu, vorzugsweise oberhalb von, der Reinigungsfluidleitung angeordnet;
- der Hauptlängsträger ist der einzige Hauptlängsträger des Förderers;
- der Förderer weist keinen weiteren Hauptlängsträger parallel zu dem Hauptlängsträger auf;
- der Hauptlängsträger ist kein fluidführendes Rohrleitungselement;
- die Reinigungsfluidleitung verläuft im Wesentlichen parallel zu dem Hauptlängsträger; und
- der Förderer ist frei von ortsfesten Gleitprofilen zum Umlenken des umlaufenden Transportelements.

Ein weiterer Aspekt betrifft eine Behälterbehandlungsanlage (z. B. zum Temperieren, Herstellen, Reinigen, Beschichten, Prüfen, Abfüllen, Verschließen, Pasteurisieren, Dekorieren, Etikettieren, Bedrucken, Beschriften, Laserbeschriften und/oder Verpacken von Behältern für flüssige oder pastöse Medien, vorzugsweise Getränke, flüssige Nahrungsmittel oder Produkte aus der Pharma- oder Health-Care-Industrie), vorzugsweise Dosenbehandlungsanlage. Die Behälterbehandlungsanlage weist eine erste Vorrichtung, vorzugsweise Füllvorrichtung zum Füllen von Behältern, eine zweite Vorrichtung, vorzugsweise Verschließvorrichtung zum Verschließen der Behälter, und einen Förderer wie hierin offenbart auf. Der Förderer ist (z. B. direkt) mit der ersten Vorrichtung zum Übernehmen der Behälter von der ersten Vorrichtung und (z. B. direkt) mit der zweiten Vorrichtung zum Übergeben der übernommenen Behälter an die zweite Vorrichtung verbunden. Vorzugsweise kann der Förderer und/oder die erste Vorrichtung und/oder die zweite Vorrichtung in einem Reinraum angeordnet sein. Vorteilhaft kann der Förderer somit zur direkten Verbindung / Verblockung von Füllvorrichtung und Verschließvorrichtung eingesetzt werden, vorzugweise unter Reinraumbedingungen.

Beispielsweise können die Behälter als Flaschen, Dosen, Kanister, Kartons, Flakons, Tuben usw. ausgeführt sein.

Ein weiterer Aspekt betrifft ein Verfahren zum Betreiben eines Förderers wie hierin offenbart oder einer Behälterbehandlungsanlage wie hierin offenbart, z. B. in einem Reinigungsbetrieb. Das Verfahren weist auf:
- Zuführen eines erwärmten Reinigungsfluids (z. B. mit einer Reinigungsfluidtemperatur ≥ 50°C, ≥ 60°C, ≥ 70°C oder ≥ 80°C) zu der Reinigungsfluidleitung; und
- Versprühen des zugeführten erwärmten Reinigungsfluids über die mehreren Sprüheinrichtungen (z. B. auf eine Oberseite des Förderers und/oder von innerhalb des Förderers).

Vorzugsweise kann das Verfahren ferner mindestens eines aufweisen von:
- Kompensieren einer durch das erwärmte Reinigungsfluid bewirkten Längsausdehnung der Reinigungsfluidleitung mittels einer schwimmenden Lagerung der Reinigungsfluidleitung bezüglich des Hauptlängsträgers;
- Kompensieren einer durch das erwärmte Reinigungsfluid bewirkten Längsausdehnung einer Überschubplatte, über die Behälter von den Mitnehmern geschoben werden, mittels einer schwimmenden Lagerung der Überschubplatte bezüglich des Hauptlängsträgers; und
- Abdichten einer Antriebsquelle des Förderers vor dem erwärmten Reinigungsfluid mittels eines abgedichteten Gehäuses, in dem die Antriebsquelle angeordnet ist.

Vorteilhaft können mit dem Verfahren die gleichen Vorteile erzielt werden, die bereits unter Bezugnahme auf die Vorrichtung erläutert wurden.

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine schematische Darstellung einer Behälterbehandlungsanlage mit einem Förderer gemäß einem Ausführungsbeispiel;
- Figur 2: eine perspektivische Ansicht eines beispielhaften Förderers;
- Figur 3: eine perspektivische Ansicht eines Abschnitts des beispielhaften Förderers
- Figur 4: eine perspektivische Ansicht eines weiteren Abschnitts des beispielhaften Förderers;
- Figur 5: eine perspektivische Ansicht eines Abschnitts des beispielhaften Förderers im Bereich eines Antriebsrads des beispielhaften Förderers;
- Figur 6: eine perspektivische Schnittansicht eines Abschnitts des beispielhaften Förderers im Bereich einer Antriebsquelle des beispielhaften Förderers; und
- Figur 7: eine perspektivische Ansicht eines Abschnitts des beispielhaften Förderers im Bereich eines Hauptumlenkrads des beispielhaften Förderers.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

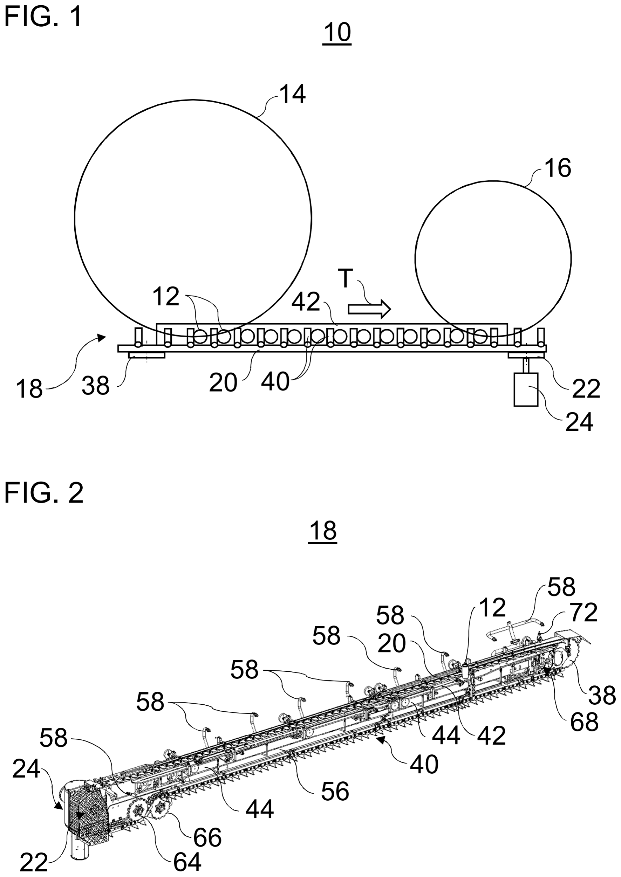

Die Figur 1 zeigt eine Behälterbehandlungsanlage 10 zum Behandeln von Behältern 12 (nur einige in Figur 1 dargestellt). Bevorzugt sind die Behälter 12 als Dosen ausgeführt, bzw. die Behälterbehandlungsanlage 10 ist eine Dosenbehandlungsanlage.

Die Behälterbehandlungsanlage 10 weist einen Förderer 18 zum Transportieren der Behälter 12 auf. Die Behälterbehandlungsanlage 10 kann ferner bspw. eine Füllvorrichtung 14 und/oder eine Verschließvorrichtung 16 aufweisen.

Die Füllvorrichtung 14 kann die Behälter 12 füllen, vorzugsweise mit einem flüssigen oder pastösen Medium. Die Füllvorrichtung 14 ist vorzugsweise als eine Rundläufer-Füllvorrichtung ausgeführt. Die Füllvorrichtung 14 kann mehrere Füllstationen zum gleichzeitigen bzw. zeitlich überlappenden Befüllen mehrerer Behälter 12 aufweisen. Bspw. können die Füllstationen verteilt um einen Umfang eines Füllerkarussells der Rundläufer-Füllvorrichtung herum angeordnet sein.

Die Verschließvorrichtung 16 kann die Behälter 12 verschließen, z. B. mit einem Deckel, einem Korken, einem Kronkorken oder einem Schraubverschluss. Die Verschließvorrichtung 16 kann vorzugsweise als eine Rundläufer-Verschließvorrichtung ausgeführt sein. Die Verschließvorrichtung 16 kann mehrere Verschließstationen zum gleichzeitigen bzw. zeitlich überlappenden Verschließen mehrerer Behälter 12 aufweisen. Bspw. können die Verschließstationen verteilt um einen Umfang eines Verschließerkarussells der Rundläufer-Verschließvorrichtung herum angeordnet sein. Die Verschließvorrichtung 16 kann bezüglich eines Behälterstroms stromabwärts von der Füllvorrichtung 14 angeordnet sein.

Vorzugsweise kann die Füllvorrichtung 14, die Verschließvorrichtung 16 und/oder der Förderer 18 in einem Isolator / einem Reinraum angeordnet sein.

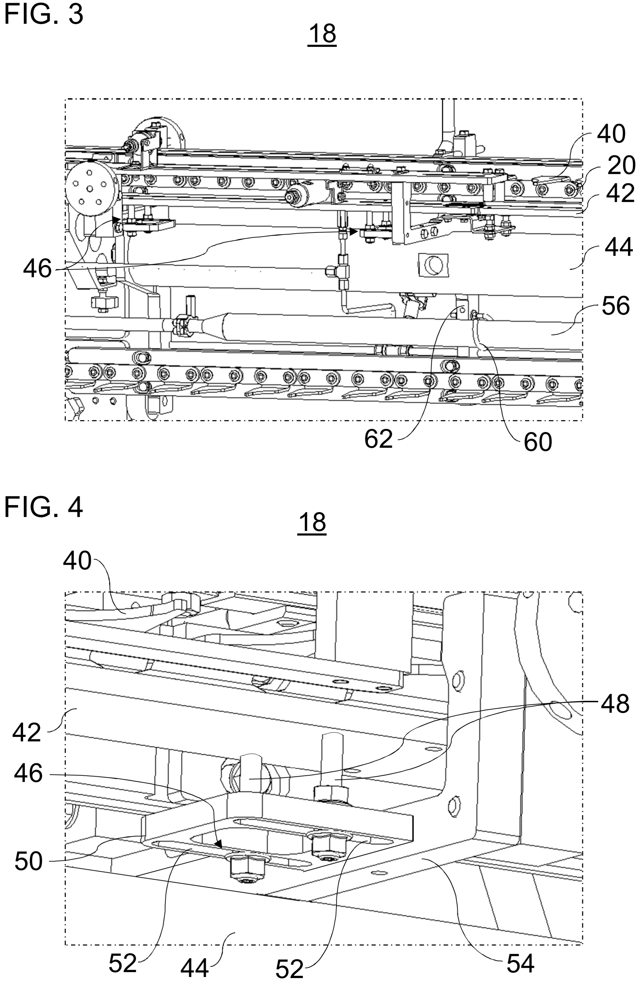

Nachfolgend ist der Förderer 18 allgemein unter Bezugnahme auf die Figur 1 und in einem besonders bevorzugten Ausführungsbeispiel unter Bezugnahme auf die Figuren 2 bis 7, die einen beispielhaften Förderer 18 im Wesentlichen vollständig (Figur 2) und in Ausschnitten (Figuren 3 bis 7) zeigen, erläutert.

Der Förderer 18 kann die Behälter 12 in einer Transportrichtung T transportieren, zum Beispiel von der Füllvorrichtung 14 zu der Verschließvorrichtung 16. Der Förderer 18 kann die Füllvorrichtung 14 und die Verschließvorrichtung 16 zum Transportieren von Behältern 12 von der Füllvorrichtung 14 zu der Verschließvorrichtung 16 miteinander, vorzugsweise direkt, verbinden.

Der Förderer 18 kann mit der Füllvorrichtung 14 zum Übernehmen von Behältern 12 von der Füllvorrichtung 14 verbunden sein, vorzugsweise direkt. Der Förderer 18 kann mit der Verschließvorrichtung 16 zum Übergeben der übernommenen Behälter 12 an die Verschließvorrichtung 16 verbunden sein, vorzugsweis direkt.

Es ist auch möglich, dass der Förderer 18 die Behälter 12 nicht direkt von der Füllvorrichtung 14 übernimmt, sondern bspw. von einem Auslaufstern, der direkt mit der Füllvorrichtung 14 verbunden ist. Es ist ebenfalls möglich, dass der Förderer 18 die Behälter 12 nicht direkt an die Verschließvorrichtung 16 übergibt, sondern bspw. an einen Einlaufstern, der direkt mit der Verschließvorrichtung 16 verbunden ist.

Der Förderer 18 kann seitliche Führungsgeländer zum seitlichen Führen der transportierten Behälter 12 aufweisen.

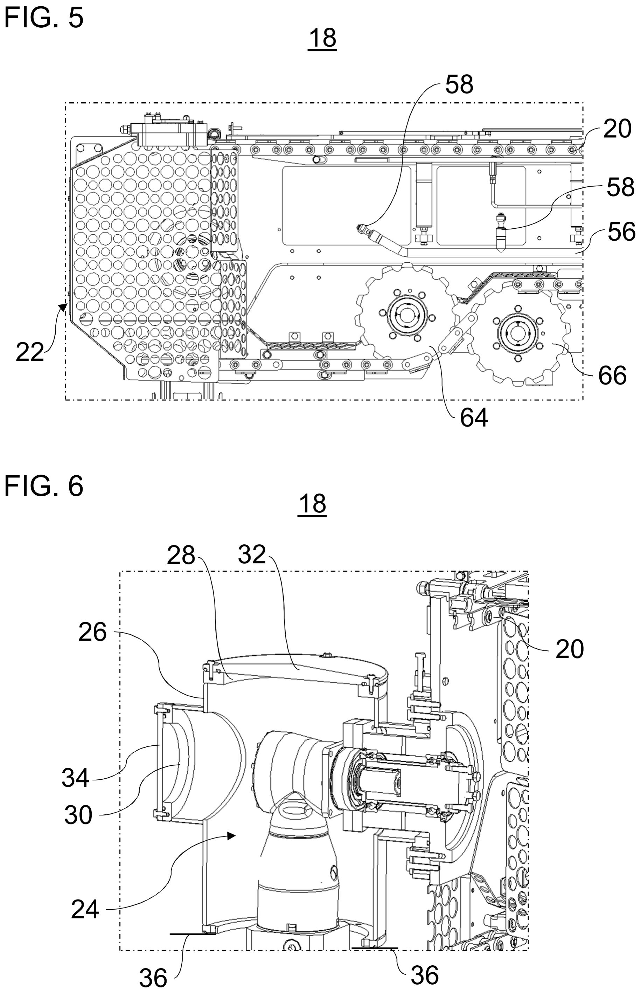

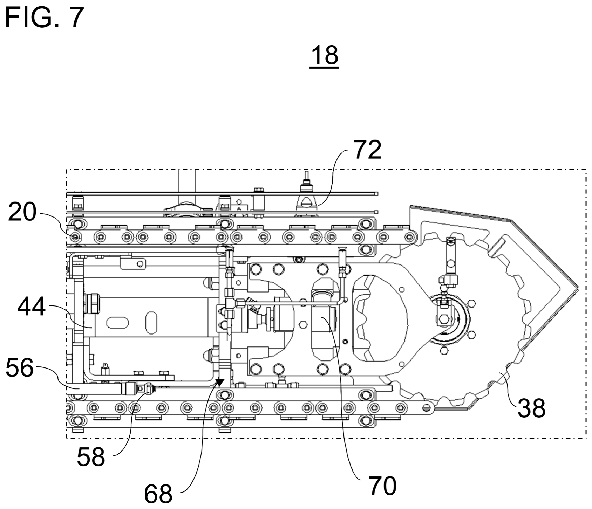

Der Förderer 18 weist ein umlaufendes Transportelement 20 und mehrere (z. B. Dosen-) Mitnehmer 40 auf. Der Förderer 18 weist ferner einen Hauptlängsträger 44 (siehe Figuren 2, 3, 4 und 7) und eine Reinigungsfluidleitung 56 (siehe Figuren 2, 3 und 5) auf. Der Förderer 18 kann bspw. noch ein Antriebsrad 22 (siehe Figuren 1, 2 und 5), eine Antriebsquelle 24 (siehe Figuren 1, 2 und 6), ein Hauptumlenkrad 38 (siehe Figuren 1, 2 und 7), eine Überschubplatte 42 (siehe Figuren 1 bis 4), mindestens ein Nebenumlenkrad 64, 66 (siehe Figuren 2 und 5) und/oder eine Spanneinrichtung 68 (siehe Figuren 2 und 7) aufweisen.

Das Transportelement 20 kann ein geschlossenes Transportelement bzw. ein Endlos-Transportelement sein. Das Transportelement 20 kann bspw. das Antriebsrad 22 und das Hauptumlenkrad 38 umlaufen. Bevorzugt ist das Transportelement 20 eine Transportkette. Das Transportelement 20 kann die Behälter 12 mittels der Mitnehmer 40 transportieren.

Das Antriebsrad 22 kann antreibend mit dem umlaufenden Transportelement 20 verbunden sein. Das Transportelement 20 kann um das Antriebsrad gelegt sein. Bevorzugt kann das Antriebsrad 22 über einen Winkelbereich von rd. 180° (z. B. bezüglich einer Mittelachse des Antriebsrads 22) um das Antriebsrad 22 gelegt sein. Vorzugsweise weist das Antriebsrad 22 eine horizontal ausgerichtete Drehachse auf.

Beispielsweise kann das Antriebsrad 22 als ein Antriebsritzel im Eingriff mit dem umlaufenden Transportelement 20 sein. Bevorzugt kann das Antriebsrad 22 ein Antriebskettenrad im Eingriff mit dem als Transportkette ausgeführten Transportelement 20 sein.

Bevorzugt ist das Antriebsrad 22 an einem der Verschließvorrichtung 16 zugeordneten Ende des Förderers 18 angeordnet. Vorzugsweise erfolgt im Bereich des Antriebsrads 22 oder direkt angrenzend daran eine Übergabe der Behälter 12 von dem Förderer 18 zu der Verschließvorrichtung 16. Alternativ kann das Antriebsrad 22 an einer anderen Position des Förderers 18 angeordnet sein, z. B. an einem der Füllvorrichtung 14 zugeordneten Ende des Förderers 18.

Die Antriebsquelle 24 kann antreibend mit dem Antriebsrad 22 verbunden sein. Bevorzugt kann die Antriebsquelle 24 als ein Elektromotor ausgeführt sein. Die Antriebsquelle 24 kann beispielsweise direkt oder über ein Getriebe mit dem Antriebsrad 22 zum Antreiben des Antriebsrads 22 verbunden sein.

Bevorzugt kann die Antriebsquelle 24 in einem abgedichteten Gehäuse 26 angeordnet sein (siehe Figur 6). Das Gehäuse 26 kann vorzugsweise eine obere Zugangsöffnung 28 und/oder eine seitliche Zugangsöffnung 30 aufweisen.

Mittels einer lösbaren Abdeckung 32 kann die obere Zugangsöffnung 28 abgedeckt werden. Beispielsweise kann die Abdeckung 32 mit dem Gehäuse 26 lösbar verschraubt sein. Mindestens ein, vorzugsweise ringförmiges, Dichtelement kann die Abdeckung 32 abgedichtet mit dem Gehäuse 26 verbinden.

Mittels einer lösbaren Abdeckung 34 kann die seitliche Zugangsöffnung 30 abgedeckt werden. Beispielsweise kann die Abdeckung 34 mit dem Gehäuse 26 lösbar verschraubt sein. Mindestens ein, vorzugsweise ringförmiges, Dichtelement kann die Abdeckung 34 abgedichtet mit dem Gehäuse 26 verbinden.

Vorzugsweise kann das Gehäuse 26 abgedichtet über ein Dichtelement auf einem Maschinentisch 36 (nur rein schematisch in Figur 6 angedeutet) aufgesetzt sein. Bevorzugt ist der Maschinentisch 36 ein Maschinentisch der Verschließvorrichtung 16 (siehe Figur 1).

In einem Reinigungsbetrieb des Förderers 18 kann das Gehäuse 26 entsprechend die Antriebsquelle 24 vor dem Reinigungsfluid schützen.

Das Hauptumlenkrad 38 kann mit dem Transportelement 20 zum Umlenken des Transportelements 20 verbunden sein. Das Transportelement 20 kann um das Hauptumlenkrad gelegt sein. Vorzugsweise kann das Transportelement 20 über einen Winkelbereich von 180° (z. B. bezüglich einer Mittelachse des Hauptumlenkrads 38) um das Hauptumlenkrad 38 gelegt sein. Vorzugsweise weist das Hauptumlenkrad 38 eine horizontal ausgerichtete Drehachse auf.

Beispielsweise kann das Hauptumlenkrad 38 als ein Umlenkritzel im Eingriff mit dem umlaufenden Transportelement 20 sein. Bevorzugt kann das Hauptumlenkrad 38 ein Umlenkkettenrad (Leerlaufkettenrad) im Eingriff mit dem als Transportkette ausgeführten Transportelement 20 sein.

Das Hauptumlenkrad 38 kann an einem Endbereich des Förderers 18 angeordnet ist. Das Hauptumlenkrad 38 kann das Transportelement 20 bspw. zurück zu dem Antriebsrad 22 umlenken. Bevorzugt ist das Hauptumlenkrad 38 an einem der Füllvorrichtung 14 zugeordneten Ende des Förderers 18 angeordnet. Vorzugsweise erfolgt im Bereich des Hauptumlenkrads 38 oder direkt angrenzend daran eine Übernahme der Behälter 12 von der Füllvorrichtung 14 zu dem Förderer 18. Alternativ kann das Hauptumlenkrad 38 an einer anderen Position des Förderers 18 angeordnet sein, z. B. an einem der Verschließvorrichtung 16 zugeordneten Ende des Förderers 18.

Vorzugsweise können das Antriebsrad 22 und das Hauptumlenkrad 38 an einander entgegengesetzten Enden des Förderers 18 angeordnet sein.

Die Mitnehmer 40 können die Behälter 12 transportieren bzw. mitnehmen. Bevorzugt kann jeder Mitnehmer 40 jeweils (nur) einen der Behälter 12 transportieren. Die Mitnehmer 40 können die Behälter 12 zum Transportieren rückseitig abstützen.

Bevorzugt können die Mitnehmer 40 als Kragarme oder Anlagefinger ausgebildet sein. Die Kragarme/Anlagefinger können die Überschubplatte 42 quer zur Transportrichtung T des Förderers 18 überspannen.

Beispielsweise können die Mitnehmer 40 jeweils eine Ausnehmung (Tasche) für einen Behälter 12 aufweisen. Die Ausnehmung kann beispielsweise zylindermantelsegmentförmig sein. Die Ausnehmung kann an einer in Transportrichtung T des Förderers 18 gewandten Seite des jeweiligen Mitnehmers 40 angeordnet sein.

Die Mitnehmer 40 sind voneinander beabstandet entlang des umlaufenden Transportelements 20 angeordnet. Die Mitnehmer 40 können bevorzugt äquidistant zueinander entlang des Transportelements 20 angeordnet sein. Beispielsweise können die Mitnehmer 40 seitlich neben dem umlaufenden Transportelement 20 angeordnet sein.

Ein Abstand benachbarter Mitnehmer 40 zueinander kann auch als eine sogenannte Teilung/Maschinenteilung bzw. ein sogenannter Teilungsabstand (für den Behältertransport) bezeichnet werden. Die Teilung kann beispielsweise in einem Bereich zwischen 70 mm und 110 mm liegen.

Die Mitnehmer 40 sind an dem Transportelement 20 zum Mitnehmen der Behälter 12, z. B. direkt oder indirekt, angebracht. Bevorzugt trägt das umlaufende Transportelement 20 die Mitnehmer 40.

Beispielsweise können die Mitnehmer 40 die Behälter 12 über die (stationäre) Überschubplatte 42 des Förderers 18 schieben. Vorzugsweise können die Mitnehmer 40 im Bereich des Zugtrums (Arbeitstrums) des Transportelements 20 oberhalb und vertikal beabstandet von der Überschubplatte 42 positioniert sein.

Die Überschubplatte 42 kann sich im Wesentlichen entlang einer gesamten Förderstrecke des Förderers 18 erstrecken. Die Überschubplatte 42 kann sich vorzugsweise von der Füllvorrichtung 14 zu der Verschließvorrichtung 16 erstrecken. Die Überschubplatte 42 kann die Behälter 12 während des Transports bodenseitig abstützen.

Beispielsweise kann die Überschubplatte 42 mehrere Überschubplattensegmente aufweisen. Die Überschubplattensegmente sind vorzugsweise fluchtend miteinander ausgerichtet sind. Oberseiten der Überschubplattensegmente liegen vorzugsweise in einer gemeinsamen Ebene bzw. sind bündig miteinander.

Alternativ zur Überschubplatte 42 könnten die Behälter 12 bspw. auf einem umlaufenden Stützelement, z. B. ein Band oder eine Mattenkette, des Förderers 18 bodenseitig abgestützt sein, während die Behälter 12 von den Mitnehmern 40 jeweils umfangsseitig (mantelseitig / rückseitig) abgestützt sind (nicht dargestellt). Es ist möglich, dass das umlaufende Stützelement mit dem Transportelement 20 zum Antreiben mittels des Transportelements 20 verbunden ist.

Der Hauptlängsträger 44 des Förderers 18 kann unterschiedliche Komponenten und Anbauteile des Förderers 18 tragen, z. B. direkt oder über Konsolen und Ausleger (siehe z. B. Figuren 2, 3, 4 und 7). Die Kernfunktion des Hauptlängsträgers 44 kann in der Abstützung anderer Komponenten und Bauteile liegen. Entsprechend kann der Hauptlängsträger 44 kein fluidführendes Rohrleitungselement sein.

Der Hauptlängsträger 44 kann das Hauptteil eines Tragrahmens / einer Tragkonstruktion des Förderers 18 sein. Der Förderer 18 weist bevorzugt keinen weiteren Hauptlängsträger parallel zu dem Hauptlängsträger 44 auf. Vorzugsweise ist der Hauptlängsträger 44 der einzige Hauptlängsträger des Förderers 18.

Beispielsweise kann der Hauptlängsträger 44 über Stützbeine (nicht dargestellt) des Förderers 18 an einem Boden abgestützt sein. Es ist möglich, dass über den Hauptlängsträger 44 im Wesentlichen alle Komponenten des Förderers 18 an den Stützbeinen abgestützt sind (Ausnahme z. B.: Antriebsquelle 24 und Gehäuse 26).

Vorzugsweise kann der Hauptlängsträger 44 sich im Wesentlichen entlang einer gesamten Länge des Förderers 18 erstrecken. Beispielsweise kann der Hauptlängsträger 44 sich ungefähr von der Füllvorrichtung 14 zu der Verschließvorrichtung 16 erstrecken.

Bevorzugt ist der Hauptlängsträger 44 rohrförmig. Beispielsweise kann der Hauptlängsträger 44 eine Wandstärke ≥ 15 mm, ≥ 20 mm oder ≥ 25 mm aufweisen. Die Rohrform kann bspw. einen (z. B. kreis-) runden oder mehreckigen (z. B. viereckigen) Querschnitt aufweisen.

Der Hauptlängsträger 44 kann vorzugsweise in einem Inneren des Förderers 18 angeordnet sein. Beispielsweise kann der Hauptlängsträger 44 bezüglich einer Querachse des Förderers 18 mittig im Förderer 18 angeordnet. Beispielsweise kann der Hauptlängsträger 44 zwischen einem Obertrum und einem Untertrum des Förderers 18 angeordnet sein. Beispielsweise kann der Hauptlängsträger 44 zwischen den beiden Längsaußenseiten des Förderers 18 angeordnet sein. Beispielsweise kann der Hauptlängsträger 44 höhenversetzt zu, vorzugsweise oberhalb von, der Reinigungsfluidleitung 56 angeordnet sein.

Beispielsweise weist der Hauptlängsträger 44 mehrere Hauptlängsträgersegmente auf. Die Hauptlängsträgersegmente können nebeneinander entlang einer gemeinsamen Längsachse angeordnet sein. Die Hauptlängsträgersegmente können vorzugsweise fluchtend miteinander ausgerichtet sein. Die Hauptlängsträgersegmente können bevorzugt endseitig aneinander befestigt sein, z. B. lösbar (z. B. mittels Schraubverbindung(en)).

Der Hauptlängsträger 44 trägt die Reinigungsfluidleitung 56 und die optionale Überschubplatte 42. Über Ausleger, Konsolen usw. kann der Hauptlängsträger 44 bspw. noch Führungsgeländer und weitere Komponenten und Bauteile des Förderers 18 tragen.

Wie beispielhaft in Figur 4 dargestellt ist, kann die Überschubplatte 42 bevorzugt schwimmend, vorzugsweise längsverschiebbar, bezüglich des Hauptlängsträgers 44 gelagert sein. Bevorzugt kann eine bspw. durch erwärmtes Reinigungsfluid im Reinigungsbetrieb oder durch Reibung oder heiße Behälter im Normalbetrieb bewirkte wärmebedingte Längsausdehnung der Überschubplatte 42 mittels der schwimmenden Lagerung der Überschubplatte 42 kompensiert, also durch die schwimmende Lagerung aufgenommen, werden.

Die schwimmende Lagerung kann bevorzugt an mehreren Lagerpunkten entlang der Überschubplatte 42 vorgesehen sein. Die Längsverschiebbarkeit kann bevorzugt bezüglich einer Längsachse des Förderers 18 bestehen.

Im Einzelnen kann eine schwimmende Lagerung mittels einer Befestigungselement-Langloch-Verbindung 46 realisiert sein. Bevorzugt sind mehrere Befestigungselement-Langloch-Verbindung 46 umfasst, die bspw. entlang einer Längsachse der Überschubplatte 42 und/oder einer Längsachse des Hauptlängsträgers 44 voneinander beabstandet sind.

Die Befestigungselement-Langloch-Verbindung 46 kann mindestens ein Befestigungselement 48, wie bspw. eine Schraube oder ein Stift, und eine Lagerplatte 50 mit mindestens einem Langloch 52 aufweisen. Eine Längsachse des mindestens einen Langlochs 52 kann im Wesentlichen parallel zu einer Längsachse des Förderer 18 sein. Das mindestens eine Befestigungselement 48 kann durch das mindestens eine Langloch 52 gesteckt und bspw. von unten in die Überschubplatte 42 eingeschraubt oder anderweitig an der Überschubplatte 42 angebracht sein. Das mindestens eine Befestigungselement 48 kann entlang des mindestens einen Langlochs 52 zur schwimmenden Lagerung der Überschubplatte 42 an der Lagerplatte 50 verschiebbar geführt sein.

Die Lagerplatte 50 kann bspw. an einem Ausleger 54 angebracht sein, der wiederum an dem Hauptlängsträger 44 angebracht sein kann. Über den Ausleger 54, die Lagerplatte 50 und das mindestens eine Befestigungselement 48 kann der Hauptlängsträger 44 die Überschubplatte 42 abstützen. Das mindestens eine Befestigungselement 48 kann sich vorzugsweise auf der Lagerplatte 50 abstützen, z. B. mittels einer Mutter.

Der Ausleger 54 kann bspw. lösbar, z. B. mittels Schraubverbindung(en), oder nicht trennbar, z. B. mittels Verschweißen, mit dem Hauptlängsträger 44 verbunden sein. Bevorzugt kann sich der Ausleger 54 mit seiner Haupterstreckungsrichtung quer zu einer Längsachse des Hauptlängsträgers 44 erstrecken.

Beispielsweise kann die Lagerplatte 50 zwei parallele Langlöcher 52 aufweisen. Durch jedes Langloch 52 kann sich ein Befestigungselement 48 erstrecken.

Die Reinigungsfluidleitung 56 dient zum Führen von Reinigungsfluid (siehe Figuren 2, 3 und 5). Die Reinigungsfluidleitung 56 kann beispielsweise mit einer Reinigungsfluidquelle, vorzugsweise Reinigungsflüssigkeitsquelle, verbunden sein. Die Reinigungsfluidquelle kann bevorzugt mindestens eine erwärmte / aufgeheizte Reinigungsflüssigkeit bereitstellen, z. B. Wasser und/oder Reinigungsschaum bzw. beim Versprühen Schaum bildende Reinigungsflüssigkeit.

Bevorzugt kann die Reinigungsfluidleitung 56 im Wesentlichen parallel zu dem Hauptlängsträger 44 verlaufen. Die Reinigungsfluidleitung 56 kann sich entlang einer Länge des Förderers 18 erstrecken, z. B. von der Füllvorrichtung 14 zu der Verschließvorrichtung 16.

Die Reinigungsfluidleitung 56 ist mit mehreren Sprüheinrichtungen 58, z. B. jeweils aufweisend eine Sprühdüse, verbunden. Über die Reinigungsfluidleitung 56 kann Reinigungsfluid zu den mehreren Sprüheinrichtungen 58 zugeführt werden. Die Sprüheinrichtungen 58 können das Reinigungsfluid versprühen, z. B auf eine Oberseite des Förderers 18 und innerhalb des Förderers 18. Bevorzugt sind die Sprüheinrichtungen 58 verteilt entlang der Förderers 18 angeordnet.

Im Reinigungsbetrieb des Förderers 18 kann dann bspw. ein erwärmtes Reinigungsfluid (z. B. Reinigungsflüssigkeit) von der Reinigungsfluidquelle zu der Reinigungsfluidleitung 56 zugeführt werden. Das erwärmte Reinigungsfluid kann bspw. eine Reinigungsfluidtemperatur ≥ 50°C, ≥ 60°C, ≥ 70°C oder ≥ 80°C aufweisen. Die Sprüheinrichtungen 58 können dann dieses Reinigungsfluid zum Reinigen des Förderers 18 versprühen.

Bevorzugt kann mindestens ein Sprüheinrichtung 58 zwischen einem Obertrum des Transportelements 20 und einem Untertrum des Transportelements 20 angeordnet sein. Mindestens eine Sprüheinrichtung 58 kann bspw. nur hin zum dem Untertrum gerichtet sein. Alternativ oder zusätzlich kann mindestens eine Sprüheinrichtung 58 hin zu dem Obertrum gerichtet sein.

Bevorzugt kann mindestens eine Sprüheinrichtung 58 auf eine Oberseite bzw. Behälterfördererseite / Behälteraufstandsseite des Förderers 18 gerichtet sein. Die mindestens eine Sprüheinrichtung 58 kann bspw. oberhalb von dem Obertrum des Transportelements 20 angeordnet sein.

Bevorzugt ist die Reinigungsfluidleitung 56 schwimmend, vorzugsweise längsverschiebbar, bezüglich des Hauptlängsträgers 44 gelagert. Bevorzugt kann eine bspw. durch das erwärmte Reinigungsfluid bewirkte wärmebedingte Längsausdehnung der Reinigungsfluidleitung 56 mittels der schwimmenden Lagerung der Reinigungsfluidleitung 56 kompensiert, also durch die schwimmende Lagerung aufgenommen, werden.

Die schwimmende Lagerung kann bevorzugt an mehreren Lagerpunkten entlang der Reinigungsfluidleitung 56 vorgesehen sein. Die Längsverschiebbarkeit kann bevorzugt bezüglich einer Längsachse des Förderers 18 bestehen.

Beispielsweise kann die Reinigungsfluidleitung 56 über mindestens ein Hakenelement 60 schwimmend gelagert sein (siehe Figur 3). Das mindestens eine Hakenelement 60 kann bspw. direkt oder über einen jeweiligen Ausleger 62 an dem Hauptlängsträger 44 angebracht und getragen sein. Das mindestens eine Hakenelement 60 kann bspw. als ein wendelförmiges oder rund gebogenes Stabelement ausgeführt sein.

Die Reinigungsfluidleitung 56 kann sich längsverschiebbar durch das mindestens eine Hakenelement 60 hindurcherstrecken. Bevorzugt sind mehrere Hakenelemente 60 umfasst, die verteilt entlang der Reinigungsfluidleitung 56 angeordnet sind.

Der Ausleger 62 kann bspw. lösbar, z. B. mittels Schraubverbindung(en), oder nicht trennbar, z. B. mittels Verschweißen, mit dem Hauptlängsträger 44 verbunden sein. Bevorzugt kann sich der Ausleger 62 mit seiner Haupterstreckungsrichtung quer zu einer Längsachse des Hauptlängsträgers 44 erstrecken.

Das mindestens eine Nebenumlenkrad 64, 66 kann das umlaufende Transportelements 20 umlenken (siehe Figuren 2 und 5). Beispielsweise kann das mindestens eine Nebenumlenkrad 64, 66 im Bereich einer Isolatorwand eines Isolators/Reinraums, in dem die Verschließvorrichtung (siehe Figur 1) angeordnet ist, angeordnet sein. Im Bereich des mindestens einen Nebenumlenkrads 64, 66 kann das Transportelement 20 bspw. den Isolator, in dem die Verschließvorrichtung (siehe Figur 1) angeordnet ist, verlassen. Bevorzugt ist das mindestens eine Nebenumlenkrad 64, 66 in einem Rückführabschnitt des Förderers 18 zum Rückführen des umlaufenden Transportelements 20 zu dem Hauptumlenkrad 38 angeordnet.

Das Transportelement 20 kann um das mindestens eine Nebenumlenkrad 64, 66 gelegt sein. Vorzugsweise weist das mindestens eine Nebenumlenkrad 64, 66 eine horizontal ausgerichtete Drehachse auf. Das mindestens eine Nebenumlenkrad 64, 66 kann das Transportelement 20 so umlenken, dass ein Höhenniveau des Transportelements 20 verändert, vorzugsweise erhöht, wird.

Beispielsweise kann das mindestens eine Nebenumlenkrad 64, 66 als ein Umlenkritzel im Eingriff mit dem umlaufenden Transportelement 20 sein. Bevorzugt kann das mindestens eine Nebenumlenkrad 64, 66 ein Umlenkkettenrad (Leerlaufkettenrad) im Eingriff mit dem als Transportkette ausgeführten Transportelement 20 sein.

Bevorzugt werden sämtliche Umlenkungen des Transportelements 20 des Förderers 18 mittels Rädern gemacht, also mittels des Antriebsrads 22, mittels des Hauptumlenkrads 38 und mittels des mindestens einen Nebenumlenkrads 64, 66. Der Förderer 18 kann somit frei von ortsfesten Gleitprofilen zum Umlenken des umlaufenden Transportelements 20 sein. Insgesamt kann damit vorteilhaft auch ein besonders ruhiger Lauf des Transportelements 20 und eine Erhöhung der Lebensdauer der Führungen und des Transportelements 20 erreicht werden.

Die Spanneinrichtung 68 dient zum Spannen des umlaufenden Transportelements 20 (siehe Figuren 2 und 7). Bevorzugt kann das Hauptumlenkrad 38 mittels der Spanneinrichtung 68 zum Spannen des umlaufenden Transportelements 20 längsverschiebbar sein. Vorzugsweise kann die Spanneinrichtung 68 eine pneumatische Spanneinrichtung sein.

Bevorzugt ist die Spanneinrichtung 68 wiederum an dem Hauptlängsträger 44 getragen. Beispielsweise kann die Spanneinrichtung 68 an einem Ende des Hauptlängsträgers 44 angeordnet und getragen sein.

Beispielsweise weist die Spanneinrichtung 68 einen, vorzugsweise pneumatischen, Druckzylinder 70 auf, der das Hauptumlenkrad 38 zum Ausfahren entlang einer Längsachse des Förderers 18 zum Spannen des umlaufenden Transportelements, vorzugsweise kontinuierlich, beaufschlagt. Der Druckzylinder 70 ist bevorzugt kontinuierlich mit Druckluft beaufschlagt, um das Hauptumlenkrad 38 in eine Richtung weg von dem Antriebsrad 22 zu drücken / zu beaufschlagen.

Beispielsweise kann der Druckzylinder 70 oder ein Kolben des Druckzylinders 70 in Wirkverbindung mit einer Drehachse des Hauptumlenkrads 38 zum Verschieben der Drehachse und damit des Hauptumlenkrads 38 sein. Bevorzugt erfolgt die Verschiebebewegung parallel zu einer Längsachse des Förderers 18.

Mittels eines Positionssensors 72 kann eine Position der Spanneinrichtung 68 erfasst werden. Alternativ kann der Positionssensor 72 bspw. eine Position des Hauptumlenkrads 38 erfassen. Die erfasste Position (der Spanneinrichtung 68 / des Hauptumlenkrads 38) ist vorzugsweise eine Längsposition relativ zu einer Längsachse des Förderer 18.

Der Positionssensor 72 kann bspw. erkennen, wenn ein Referenzpunkt oder ein Referenzteil der Spanneinrichtung 68 / des Hauptumlenkrads 38 einen Überwachungsbereich verlässt oder in einen Überwachungsbereich eindringt.

Eine Steuereinrichtung kann bevorzugt eine Funktionsfähigkeit des umlaufenden Transportelements 20 abhängig von einer Signalausgabe des Positionssensors 72 überwachen. So kann bspw. eine übermäßige Längung oder ein Riss des Transportelements 20 erkannt werden. Die Steuereinrichtung kann bspw. eine Ausgabeeinrichtung (z. B. Anzeige, Lautsprecher und/oder Signalleuchte) zum Ausgeben einer Information über die überwachte Funktionsfähigkeit betreiben und/oder einen Betrieb des Förderers 18 stoppen, wenn eine mangelnde Funktionsfähigkeit erkannt wird (z. B. erfasste Position außerhalb von vorgegebenem Toleranzbereich oder Überwachungsbereich).

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration des Transportelements, der Mitnehmer, der Reinigungsfluidleitung, der Sprüheinrichtungen und/oder des Hauptlängsträgers des unabhängigen Anspruchs 1 offenbart und beanspruchbar. Alle Bereichsangaben hierin sind derart offenbart zu verstehen, dass gleichsam alle in den jeweiligen Bereich fallenden Werte einzeln offenbart und beanspruchbar sind, z. B. auch als jeweils bevorzugte engere Außengrenzen des jeweiligen Bereichs.

### Bezugszeichenliste

| | | | |
|---|---|---|---|
| 10 | Behälterbehandlungsanlage | 44 | Hauptlängsträger |
| 12 | Behälter | 46 | Befestigungselement-Langloch-Ver-bindung |
| 14 | Füllvorrichtung | | |
| 16 | Verschließvorrichtung | 48 | Befestigungselement |
| 18 | Förderer | 50 | Lagerplatte |
| 20 | Transportelement | 52 | Langloch |
| 22 | Antriebsrad | 54 | Ausleger |
| 24 | Antriebsquelle | 56 | Reinigungsfluidleitung |
| 26 | Gehäuse | 58 | Sprüheinrichtung |
| 28 | obere Zugangsöffnung | 60 | Hakenelement |
| 30 | seitliche Zugangsöffnung | 62 | Ausleger |
| 32 | Abdeckung | 64 | Nebenumlenkrad |
| 34 | Abdeckung | 66 | Nebenumlenkrad |
| 36 | Maschinentisch | 68 | Spanneinrichtung |
| 38 | Hauptumlenkrad | 70 | Druckzylinder |
| 40 | Mitnehmer | 72 | Positionssensor |
| 42 | Überschubplatte | T | Transportrichtung |

## Patentansprüche

1. Förderer (18) zum Behältertransport, vorzugsweise Dosentransport, für eine Behälterbehandlungsanlage (10), wobei der Förderer (18) aufweist:
ein umlaufendes Transportelement (20), vorzugsweise eine Transportkette;
mehrere Mitnehmer (40), vorzugsweise Kragarme oder Anlagefinger, wobei die mehreren Mitnehmer (40) voneinander beabstandet entlang des umlaufenden Transportelements (20) angeordnet sind und an dem umlaufenden Transportelement (20) zum Mitnehmen von Behältern (12), vorzugsweise jeweils eines Behälters (12), angebracht sind;
eine Reinigungsfluidleitung (56) zum Führen von Reinigungsfluid;
mehrere Sprüheinrichtungen (58), die mit der Reinigungsfluidleitung (56) zum Versprühen des Reinigungsfluids verbunden sind; und
einen, vorzugsweise rohrförmigen, Hauptlängsträger (44), der das umlaufende Transportelement (20) und die Reinigungsfluidleitung (56) trägt.

2. Förderer (18) nach Anspruch 1, wobei:
die Reinigungsfluidleitung (56) schwimmend, vorzugsweise längsverschiebbar, bezüglich des Hauptlängsträgers (44) gelagert ist, bevorzugt zum Kompensieren einer wärmebedingten Längsausdehnung der Reinigungsfluidleitung (56),
wobei vorzugsweise mindestens eines erfüllt ist von:
die Reinigungsfluidleitung (56) ist über mindestens ein Hakenelement (60) schwimmend bezüglich des Hauptlängsträgers (44) gelagert ist; und
die Reinigungsfluidleitung (56) ist an einem Ausleger (62), der mit dem Hauptlängsträger (44) verbunden ist, schwimmend gelagert.

3. Förderer (18) nach Anspruch 1 oder Anspruch 2, ferner aufweisend:
eine Überschubplatte (42), über die die Behälter (12) während des Mitnehmens mittels der Mitnehmer (40) schiebbar sind,
wobei die Überschubplatte (42) von dem Hauptlängsträger (44) getragen ist.

4. Förderer (18) nach Anspruch 3, wobei:
die Überschubplatte (42) schwimmend, vorzugsweise längsverschiebbar, bezüglich des Hauptlängsträgers (44) gelagert ist, bevorzugt zum Kompensieren einer wärmebedingten Längsausdehnung der Überschubplatte (42),
wobei vorzugsweise mindestens eines erfüllt ist von:
die Überschubplatte (42) ist bezüglich des Hauptlängsträgers (44) mittels einer Befestigungselement-Langloch-Verbindung (46) schwimmend bezüglich des Hauptlängsträgers (44) gelagert;
die Überschubplatte (42) ist an einem Ausleger (54), der mit dem Hauptlängsträger (44) verbunden ist, schwimmend gelagert.

5. Förderer (18) nach Anspruch 3 oder Anspruch 4, wobei mindestens eines erfüllt ist von:
die Überschubplatte (42) erstreckt sich im Wesentlichen entlang einer gesamten Förderstrecke des Förderers (18); und
die Überschubplatte (42) weist mehrere Überschubplattensegmente, die miteinander, vorzugsweise fluchtend, ausgerichtet sind, auf.

6. Förderer (18) nach einem der vorherigen Ansprüche, ferner aufweisend:
ein Antriebsrad (22) zum Antreiben des Transportelements (20), wobei das Transportelement um das Antriebsrad (22) gelegt ist, vorzugsweise über einen Winkelbereich von 180° des Antriebsrads (22);
eine Antriebsquelle (24), die antreibend mit dem Antriebsrad (22) verbunden ist; und
ein abgedichtetes Gehäuse (26), in dem die Antriebsquelle (24) angeordnet ist.

7. Förderer (18) nach einem der vorherigen Ansprüche, wobei mindestens eines erfüllt ist von:
das abgedichtete Gehäuse (26) weist mindestens eine Zugangsöffnung (28, 30), vorzugsweise eine obere Zugangsöffnung (28) und eine seitliche Zugangsöffnung (30), auf, die mittels einer lösbaren Abdeckung (32, 34) abgedeckt und mit einem, vorzugsweise ringförmigen, Dichtelement abgedichtet ist; und
das abgedichtete Gehäuse (26) ist über ein Dichtelement abgedichtet auf einem Maschinentisch (36) aufgesetzt.

8. Förderer (18) nach einem der vorherigen Ansprüche, ferner aufweisend:
ein Hauptumlenkrad (38) zum Umlenken des umlaufenden Transportelements (20), wobei:
das umlaufende Transportelement (20) um das Hauptumlenkrad (38) gelegt ist, vorzugsweise über einen Winkelbereich von 180° des Hauptumlenkrads (38); und
das Hauptumlenkrad (38) an einem Endbereich des Förderers (18) angeordnet ist.

9. Förderer (18) nach Anspruch 8, ferner aufweisend:
eine, vorzugsweise aktive, Spanneinrichtung (68) zum Spannen des umlaufenden Transportelements (20);
wobei:
das Hauptumlenkrad (38) mittels der Spanneinrichtung (68) zum Spannen des umlaufenden Transportelements (20) längsverschiebbar ist.

10. Förderer (18) nach Anspruch 9, wobei mindestens eines erfüllt ist von:
die Spanneinrichtung (68) ist an dem Hauptlängsträger (44) getragen, vorzugsweise an einem Ende des Hauptlängsträgers (44);
die Spanneinrichtung (68) ist eine pneumatische Spanneinrichtung; und
die Spanneinrichtung (68) weist einen, vorzugsweise pneumatischen, Druckzylinder (70) auf, der das Hauptumlenkrad (38) zum Ausfahren entlang einer Längsachse des Förderers (18) zum Spannen des umlaufenden Transportelements (20) beaufschlagt.

11. Förderer (18) nach einem der Ansprüche 8 bis 10, ferner aufweisend:
einen Positionssensor (72) zum Erfassen einer Position der Spanneinrichtung (68) und/oder des Hauptumlenkrads (38); und
eine Steuereinrichtung, die dazu konfiguriert ist, eine Funktionsfähigkeit des umlaufenden Transportelements (20) abhängig von einer Signalausgabe des Positionssensors (72) zu überwachen.

12. Förderer (18) nach einem der vorherigen Ansprüche, ferner aufweisend:
mindestens ein Nebenumlenkrad (64, 66) zum Umlenken des umlaufenden Transportelements (20),
wobei:
das umlaufende Transportelement (20) um das mindestens eine Nebenumlenkrad (64, 66) gelegt ist;
das mindestens eine Nebenumlenkrad (64, 66) in einem Rückführabschnitt des Förderers (18) zum Rückführen des umlaufenden Transportelements (20) angeordnet ist; und
das mindestens eine Nebenumlenkrad (64, 66) ein Höhenniveau des umlaufenden Transportelements (20) verändert, vorzugsweise erhöht.

13. Förderer (18) nach einem der vorherigen Ansprüche, wobei mindestens eines erfüllt ist von:
der Hauptlängsträger (44) ist bezüglich einer Querachse des Förderers (18) mittig im Förderer (18) angeordnet;
der Hauptlängsträger (44) ist zwischen einem Obertrum und einem Untertrum des Förderers (18) angeordnet;
der Hauptlängsträger (44) erstreckt sich im Wesentlichen entlang einer gesamten Länge des Förderers (18);
der Hauptlängsträger (44) weist mehrere Hauptlängsträgersegmente auf, die miteinander, vorzugsweise fluchtend, ausgerichtet sind;
der Hauptlängsträger (44) ist höhenversetzt zu, vorzugsweise oberhalb von, der Reinigungsfluidleitung (56) angeordnet;
der Hauptlängsträger (44) ist der einzige Hauptlängsträger des Förderers (18);
der Förderer (18) weist keinen weiteren Hauptlängsträger parallel zu dem Hauptlängsträger (44) auf;
der Hauptlängsträger (44) ist kein fluidführendes Rohrleitungselement;
die Reinigungsfluidleitung (56) verläuft im Wesentlichen parallel zu dem Hauptlängsträger (44); und
der Förderer (18) ist frei von ortsfesten Gleitprofilen zum Umlenken des umlaufenden Transportelements (20).

14. Behälterbehandlungsanlage (10), vorzugsweise Dosenbehandlungsanlage, wobei die Behälterbehandlungsanlage (10) aufweist:
eine erste Vorrichtung, vorzugsweise Füllvorrichtung (14) zum Füllen von Behältern (12);
eine zweite Vorrichtung, vorzugsweise Verschließvorrichtung (16) zum Verschließen der Behälter (12); und
einen Förderer (18) nach einem der vorherigen Ansprüche, wobei der Förderer (18) mit der ersten Vorrichtung zum Übernehmen der Behälter (12) von der ersten Vorrichtung und mit der zweiten Vorrichtung zum Übergeben der übernommenen Behälter (12) an die zweite Vorrichtung verbunden ist,
wobei vorzugsweise:
der Förderer (18) und/oder die erste Vorrichtung und/oder die zweite Vorrichtung in einem Reinraum angeordnet ist.

15. Verfahren zum Betreiben eines Förderers (18) nach einem der Ansprüche 1 bis 13 oder einer Behälterbehandlungsanlage nach Anspruch 14, wobei das Verfahren aufweist:
Zuführen eines erwärmten Reinigungsfluids zu der Reinigungsfluidleitung (56); und
Versprühen des zugeführten erwärmten Reinigungsfluids über die mehreren Sprüheinrichtungen (58),
wobei vorzugsweise das Verfahren ferner mindestens eines aufweist von:
Kompensieren einer durch das erwärmte Reinigungsfluid bewirkten Längsausdehnung der Reinigungsfluidleitung (56) mittels einer schwimmenden Lagerung der Reinigungsfluidleitung (56) bezüglich des Hauptlängsträgers (44);
Kompensieren einer durch das erwärmte Reinigungsfluid bewirkten Längsausdehnung einer Überschubplatte (42), über die Behälter (12) von den Mitnehmern (40) geschoben werden, mittels einer schwimmenden Lagerung der Überschubplatte (42) bezüglich des Hauptlängsträgers (44); und
Abdichten einer Antriebsquelle (24) des Förderers (18) vor dem erwärmten Reinigungsfluid mittels eines abgedichteten Gehäuses (26), in dem die Antriebsquelle (24) angeordnet ist.
